Europäisches Patentamt

European Patent Office

Office européen des brevets

(11) Veröffentlichungsnummer : **0 108 951**
**B1**

# EUROPÄISCHE PATENTSCHRIFT

(45) Veröffentlichungstag der Patentschrift :
30.07.86

(21) Anmeldenummer : **83110407.0**

(22) Anmeldetag : **19.10.83**

(51) Int. Cl.⁴ : **F 16 K 27/04, F 15 B 13/04**

(54) **Wegeventil.**

(30) Priorität : 05.11.82 DE 3240827

(43) Veröffentlichungstag der Anmeldung :
23.05.84 Patentblatt 84/21

(45) Bekanntmachung des Hinweises auf die Patenterteilung : 30.07.86 Patentblatt 86/31

(84) Benannte Vertragsstaaten :
DE FR GB IT SE

(56) Entgegenhaltungen :
DE-A- 2 004 451
FR-A- 2 176 198

(73) Patentinhaber : ROBERT BOSCH GMBH
Postfach 50
D-7000 Stuttgart 1 (DE)

(72) Erfinder : Schock, Manfred, Dipl.-Ing.
Neuhalde 26
D-7140 Ludwigsburg (DE)
Erfinder : Slowak, Diether, Dipl.-Ing.
Frankenstrasse 51
D-7141 Schwieberdingen (DE)

## Beschreibung

### Stand der Technik

Die Erfindung geht aus von einem Wegeventil nach der Gattung des Hauptanspruchs. Es ist aus der französischen Druckschrift FR-A-2 176 198 ein Wegeventil bekannt, bei dem die Ventilbuchse aus Kunststoff mit angeformten Dichtwülsten besteht. Diese Anordnung hat aber den Nachteil, daß sie nicht für hohe Drücke geeignet ist, da die Ventilbuchse unter diesen Bedingungen keine Formkonstanz aufweist.

### Vorteile der Erfindung

Das erfindungsgemäße Wegeventil mit den kennzeichnenden Merkmalen des Hauptanspruchs hat demgegenüber den Vorteil, daß die Ventilbuchse besonders stabil ist, da das Stützteil die Festigkeit der Ventilbuchse erhöht und damit eine Verwendung auch bei höheren Drücken erlaubt.

Durch die in den Unteransprüchen aufgeführten Maßnahmen sind vorteilhafte Weiterbildungen und Verbesserungen der im Hauptanspruch angegebenen Merkmale möglich.

### Zeichnung

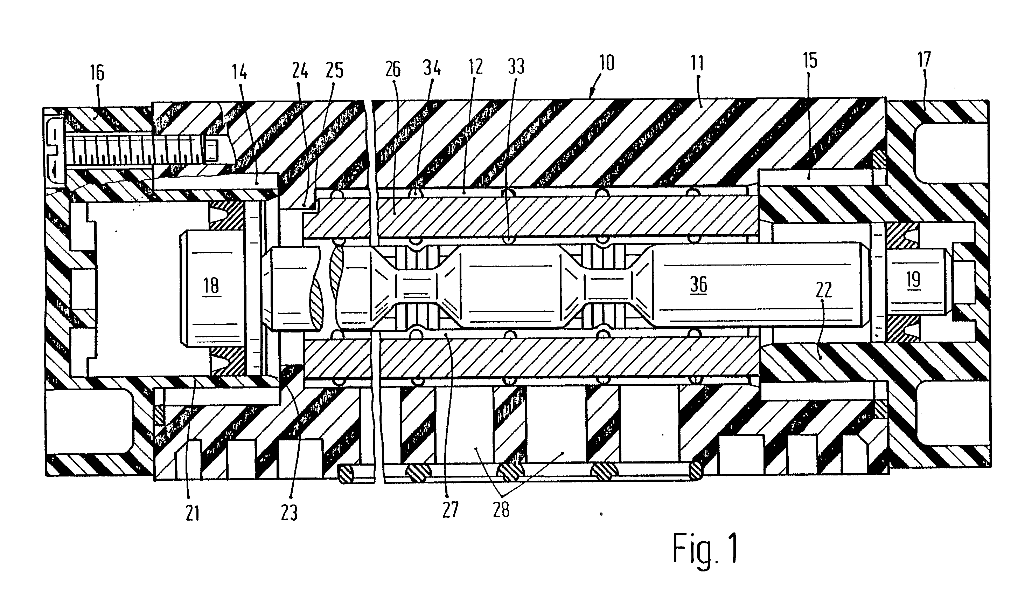

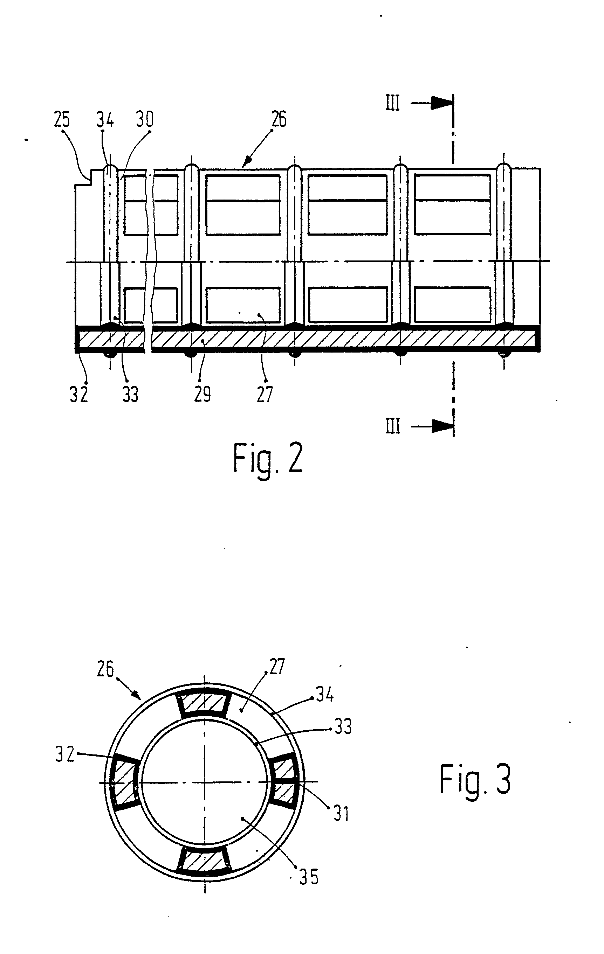

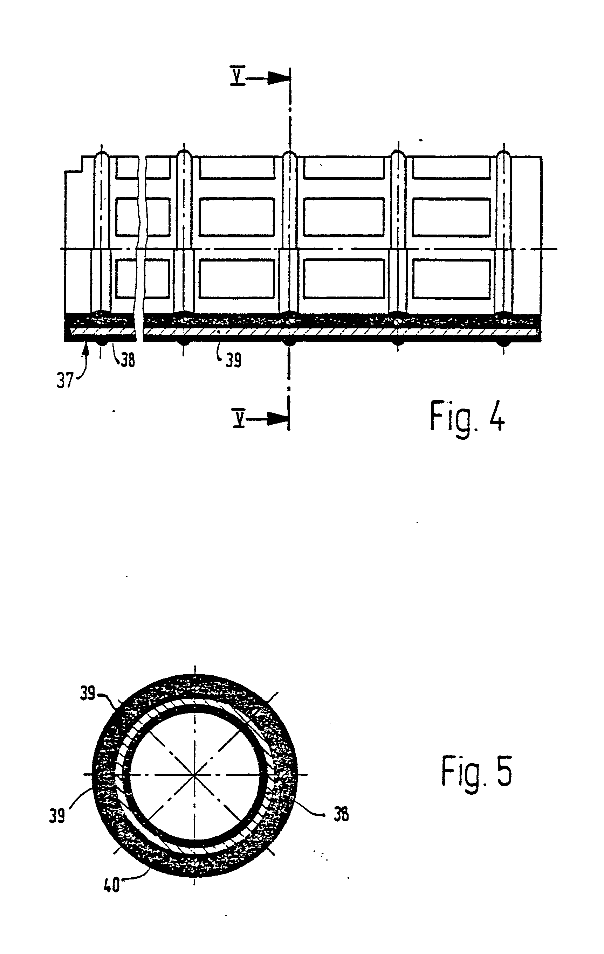

Zwei Ausführungsbeispiele der Erfindung sind in der Zeichnung dargestellt und in der nachfolgenden Beschreibung näher erläutert. Es zeigen Figur 1 einen Längsschnitt durch ein Wegeventil, Figur 2 einen Halbschnitt durch eine Ventilbuchse des ersten Ausführungsbeispiels, Figur 3 einen Schnitt nach III-III der Figur 2, Figur 4 einen Halbschnitt durch eine Ventilbuchse des zweiten Ausführungsbeispiels und Figur 5 einen Schnitt nach V-V der Figur 4.

### Beschreibung der Ausführungsbeispiele

Das Wegeventil 10 hat ein Ventilgehäuse 11 mit einer durchgehenden Längsbohrung 12. Diese weist zwei abgesetzte Außenabschnitte 14, 15 auf, in die jeweils ein Deckel 16 bzw. 17 mit einem einen Kolben 18 bzw. 19 aufnehmenden Fortsatz 21 bzw. 22 ragt. An der Längsbohrung 12 ist zum Fortsatz 21 hin eine Anschlagschulter 23 sowie eine Führungswarze 24 ausgebildet. Letztere greift in eine entsprechende Vertiefung 25 einer Ventilbuchse 26, um diese am Verdrehen zu hindern.

Die Ventilbuchse 26 ist aus einer rechteckigen Blechplatte hergestellt. In dieser sind in vier Reihen jeweils fünf gleich große Öffnungen 27 ausgestanzt, die gleichmäßig über die Blechplatte verteilt sind. Die Öffnungen 27 selbst haben rechteckige oder quadratische Form und dienen als Durchgänge für das Druckmittel zu fünf Anschlüssen 28 im Ventilgehäuse 11. Durch das Austanzen der Öffnungen 27 entstehen Längs- 29 und Querstege 30. Alle Längsstege 29 haben gleiche Baumaße. Das gleiche gilt auch untereinander für die Querstege 30.

Anschließend wird die Blechplatte gerollt und an der Nahtstelle 31 verschweißt. Die Ventilbuchse 26 wird nun mit einer gummielastischen Spritzmasse 32 vollständig umgeben. Auf der Ober- und Unterseite der Querstege 30 sind Dichtwülste 33, 34 aufgespritzt. Die Dichtwülste 33, 34 bestehen aus demselben Material wie die Spritzmasse 32. Somit können die Dichtwülste 33, 34 und die Spritzmasse 32 in einem Arbeitsgang aufgebracht werden.

In der Längsbohrung 35 der Ventilbuchse 26 ist ein Längsschieber 36 geführt. Die Abdichtung zwischen dem Längsschieber 36 und der Ventilbuchse 26 übernehmen die inneren Dichtwülste 33.

In einem zweiten Ausführungsbeispiel ist das Stützteil als Drahtgitter 37 ausgebildet. Dieses weist sechs ringförmige Querstege 38 mit gleichen Abständen auf. Auf diese Querstege 38 sind außen, um jeweils 45° versetzt acht Längsdrähte 39 angebracht. Das Drahtgitter 37 ist in einem gummielastischen Werkstoff eingebettet, der die Querstege 38 und Längsdrähte 39 umschließt und gleichzeitig auf der Ober- und Unterseite der Querstege 38 wiederum Dichtwülste 40 bildet.

Die Wirkungsweise des Wegeventils ist allgemein bekannt und deshalb nicht näher erläutert.

### Patentansprüche

1. Wegeventil (10) mit einem Ventilgehäuse (11) und einer in einer Bohrung (12) desselben angeordneten, einen Längsschieber (36) aufnehmenden Ventilbuchse (26) aus Kunststoff, in deren Wand eine Vielzahl von gleichmäßig über deren Länge und Breite verteilten Öffnungen (27) zum Durchtritt des Druckmittels zu Steuerkanälen (28) angeordnet sind, und an deren Außen- und Innenfläche ringförmige Dichtwülste (33, 34) angeordnet sind, dadurch gekennzeichnet, daß in die Ventilbuchse (26) ein die Durchtrittsöffnungen (27) aufweisendes käfigartiges Stützteil aus metallischem Werkstoff eingebettet ist.

2. Wegeventil nach Anspruch 1, dadurch gekennzeichnet, daß das Stützteil aus einer Blechplatte geformt ist, aus der Öffnungen (27) vor dem Verformen ausgestanzt sind.

3. Wegeventil nach Anspruch 1 und/oder 2, dadurch gekennzeichnet, daß die nach dem Ausstanzen der Öffnungen (27) verbliebenen Längs- (29) und Querstege (30) von einem gummielastischen Werkstoff umhüllt sind.

4. Wegeventil nach einem der Ansprüche 1 bis 3, dadurch gekennzeichnet, daß innen und außen an den Querstegen (30) Dichtwülste (33, 34) aus einem gummielastischen Werkstoff ausgebildet sind.

5. Wegeventil nach einem der Ansprüche 1 bis 4, dadurch gekennzeichnet, daß die Dichtwülste (33, 34) aus dem gleichen gummielastischen Werkstoff gebildet sind, mit dem auch die Längs- (29) und Querstege (30) umhüllt sind.

6. Wegeventil nach einem der Ansprüche 1 bis 5, dadurch gekennzeichnet, daß der gummielastische Werkstoff durch Spritzen aufgebracht ist.

7. Wegeventil nach einem der Ansprüche 1 bis 6, dadurch gekennzeichnet, daß die Nahtstelle (31) der gerollten Blechplatte geschweißt ist.

8. Wegeventil nach einem der Ansprüche 1 bis 7, dadurch gekennzeichnet, daß die Blechplatte aus Stahlblech besteht.

9. Wegeventil nach Anspruch 1, dadurch gekennzeichnet, daß das Stützteil aus einem Drahtgitter besteht.

## Claims

1. Directional valve (10) with a valve housing (11) and a valve bush (26) of plastic arranged in a bore (12) of said valve housing and receiving a longitudinal slide valve (36), in the wall of which valve bush are arranged a plurality of openings (27) distributed evenly over its length and width for passage of the pressure medium to ports (28) and at the outside and inside surfaces of which annular sealing beads (33, 34) are arranged, characterised in that a cage-like support part of metallic material having the passage openings (27) is embedded in the valve bush (26).

2. Directional valve according to Claim 1, characterised in that the support part is formed from a sheet metal plate, from which openings (27) are punched out before forming.

3. Directional valve according to Claim 1 and/or 2, characterised in that the longitudinal (29) and transverse webs (30) remaining after punching out the openings (27) are sheathed by an elastomeric material.

4. Directional valve according to one of Claims 1 to 3, characterised in that sealing beads (33, 34) of an elastomeric material are made on the inside and outside of the transverse webs (30).

5. Directional valve according to one of Claims 1 to 4, characterised in that the sealing beads (33, 34) are formed of the same elastomeric material with which the longitudinal (29) and transverse webs (30) are also sheathed.

6. Directional valve according to one of Claims 1 to 5 characterised in that the elastomeric material is applied by injection-moulding.

7. Directional valve according to one of Claims 1 to 6, characterised in that the seam (31) of the rolled sheet metal plate is welded.

8. Directional valve according to one of Claims 1 to 7, characterised in that the sheet metal plate consists of sheet steel.

9. Directional valve according to Claim 1, characterised in that the support part consists of a wire grid.

## Revendications

1. Vanne à voies multiples (10) présentant un carter (11) et un manchon (26) en plastique qui est disposé dans un alésage (12) de la vanne, qui reprend un coulisseau longitudinal (36), dans la paroi duquel sont disposés un grand nombre d'ouvertures (27), régulièrement réparties sur sa longueur et sur sa largeur, pour le passage du fluide sous pression en direction des canaux de commande (28) et sur la surface extérieure et sur la surface intérieure duquel sont disposés des bourrelets d'étanchéité de forme annulaire (33, 34), caractérisée en ce que, dans le manchon (26), est encastrée une pièce support, du type cage, en matériau métallique, présentant les ouvertures de passage (27).

2. Vanne à voies multiples selon la revendication 1, caractérisée en ce que la pièce support est formée à partir d'une plaque de tôle dans laquelle des ouvertures (27) sont découpées avant son formage.

3. Vanne à voies multiples selon la revendication 1 et/ou 2, caractérisée en ce que les barrettes longitudinales (29) et transversales (30) qui subsistent après le découpage des ouvertures (27) sont enrobées dans un matériau à élasticité caoutchouc.

4. Vanne à voies multiples selon l'une des revendications 1 à 3, caractérisée en ce qu'à l'intérieur et à l'extérieur, sur les barrettes transversales (30) sont prévus des bourrelets d'étanchéité (33, 34) en un matériau à élasticité caoutchouc.

5. Vanne à voies multiples selon l'une des revendications 1 à 4, caractérisée en ce que les bourrelets d'étanchéité (33, 34) sont formés du même matériau à élasticité caoutchouc que celui dont sont enrobées les barrettes longitudinales (29) et transversales (30).

6. Vanne à voies multiples selon l'une des revendications 1 à 5, caractérisée en ce que le matériau à élasticité caoutchouc est rapporté par injection.

7. Vanne à voies multiples selon l'une des revendications 1 à 6, caractérisée en ce que la jonction (31) de la plaque de tôle roulée est soudée.

8. Vanne à voies multiples selon l'une des revendications 1 à 7, caractérisée en ce que la plaque de tôle est en tôle d'acier.

9. Vanne à voies multiples selon la revendication 1, caractérisée en ce que la pièce support est constituée d'un treillis métallique.

Fig. 1

0 108 951

Fig. 2

Fig. 3

Fig. 4

Fig. 5